# FASCICULE DE BREVET EUROPEEN

(11) **EP 3 126 786 B1**
(45) Date de publication et mention de la délivrance du brevet: **09.09.2020**
(21) Numéro de dépôt: 15713862.9
(22) Date de dépôt: 27.03.2015
(51) Int. Cl.: G01F 1/06, B05B 1/18

(54) **PROCÉDÉ ET DISPOSITIF DE SURVEILLANCE DE L'ÉCOULEMENT D'UN LIQUIDE**
VERFAHREN UND GERÄT ZUR ÜBERWACHUNG DES STRÖMUNG EINER FLÜSSIGKEIT
METHOD AND APPARATUS FOR MONITORING THE FLOW OF A LIQUID

(30) Priorité: 31.03.2014 FR 1452781
(43) Date de publication de la demande: 08.02.2017
(73) Titulaire: Smart and Blue, 38430 Moirans (FR)
(72) Inventeur: DELLA-MONICA, Gabriel, 38430 Moirans (FR)
(74) Mandataire: Casalonga
(86) Numéro de dépôt international: PCT/EP2015/056680
(87) Numéro de publication internationale: WO 2015/150247

(56) Documents cités:
- EP-A1- 1 610 100
- EP-A1- 2 158 972
- WO-A1-2010/075848
- FR-A1- 2 960 638
- US-A- 4 936 508
- US-A1- 2003 233 885

## Description

La présente invention concerne le domaine des appareils de contrôle ou de surveillance de l'écoulement d'un fluide tel que de l'eau dans des conduits d'installations domestiques ou industrielles.

La demande de brevet européen EP 2 158 972 décrit un pommeau de douche muni d'une turbine pouvant tourner sous l'effet du courant d'eau et d'un générateur entraîné en rotation par cette turbine pour produire un courant électrique d'alimentation en énergie électrique d'un circuit électronique et de diodes électroluminescentes. Le circuit électronique comprend un capteur de température de l'eau et un régulateur du courant d'alimentation des diodes électroluminescentes pour que l'effet visuel de ces dernières varie avec la température de l'eau.

La demande de brevet français FR 2 960 638 décrit un système de contrôle de débit d'un fluide, qui comprend un circuit électronique apte à mesurer, via une turbine entraînée par le fluide, le débit du fluide et avertissant de l'existence éventuelle d'un débit excessif du fluide, au-delà d'une valeur prédéterminée, pour fermer une vanne. Ce système comprend une batterie d'alimentation permettant de faire fonctionner le circuit électronique de manière autonome. La turbine est reliée à un générateur de courant pour exclusivement charger la batterie.

La demande de brevet aux Etats-Unis US 2003/0233885 décrit un dispositif de contrôle et de mesure pour un fluide, qui comprend un circuit électronique apte à calculer le volume consommé de fluide à partir d'un signal issu d'un capteur de rotation d'une turbine entraînée par le fluide. Le débit du fluide et le volume consommé sont affichés. En outre, un volume maximum est enregistré et lorsque ce volume déterminé est consommé, un signal est affiché et une vanne est fermée.

Le brevet aux Etats-Unis US 4936 508 décrit un dispositif de contrôle de volume d'eau d'un pommeau de douche, dans lequel les débits d'eau sont successivement comparés à une table enregistrée de sorte à déterminer des volumes cumulés d'eau écoulée qui, comparés à des volumes prédéterminés, permettent la commande d'un avertisseur.

Il est proposé un procédé de surveillance de l'écoulement d'un liquide et de fonctionnement d'un dispositif électronique porté par un appareil muni d'une turbine apte à être entraînée en rotation par un flux d'un fluide, d'un générateur de courant comprenant un rotor relié en rotation à ladite turbine et un stator et délivrant un courant alternatif substantiellement sinusoïdal et d'un moyen de détection d'au moins une position angulaire déterminée de ladite turbine, délivrant une impulsion électrique à chaque fois que la turbine passe par cette position angulaire, ledit moyen de détection comprenant un comparateur apte à délivrer ladite impulsion électrique à chaque fois que la valeur du courant alternatif issu du générateur de courant passe au-dessus d'un seuil de courant, un volume élémentaire étant égal au volume écoulé entre deux impulsions successives.

Le procédé comprend : incrémenter un compteur d'impulsions électriques à chaque fois que le moyen de détection délivre une impulsion électrique ; fixer, depuis une valeur d'origine, des seuils de valeurs du nombre d'impulsions ; et activer sélectivement un moyen d'avertissement pour délivrer des signaux d'avertissement différents quand les nombres d'impulsions délivrés par le compteur d'impulsions, correspondant audit volume élémentaire multiplié par ce nombre d'impulsions délivré, se situent dans des plages de valeurs déterminées par lesdits seuils de valeurs.

Le procédé peut comprendre : remettre le compteur d'impulsions à ladite valeur d'origine au bout d'un délai prédéterminé lorsque la valeur du nombre d'impulsions délivrée par le compteur d'impulsions reste identique pendant ce délai.

Le procédé peut comprendre : calculer en temps réel la fréquence desdites impulsions ; et alimenter en énergie électrique le moyen d'avertissement en fonction de cette fréquence calculée.

Ledit moyen d'avertissement peut être alimenté en énergie électrique en fonction de la vitesse de rotation de ladite turbine.

Le générateur de courant électrique peut être relié à un accumulateur d'énergie électrique via un point commun d'alimentation en vue d'alimenter en énergie électrique et le dispositif électronique peut comprendre au moins un premier groupe de circuits et un second groupe de circuits. Alors, le procédé peut comprendre : détecter en temps réel la valeur de la vitesse de rotation de la turbine ; alimenter en énergie électrique via ledit point commun le premier groupe de circuits et le second groupe de circuits si la valeur de la vitesse de rotation est supérieure ou égale à un seuil de vitesse ; et n'alimenter en énergie électrique via ledit point commun que ledit premier groupe de circuits si la valeur de la vitesse de rotation est inférieure audit seuil de vitesse.

Il est également proposé un appareil de surveillance de l'écoulement d'un liquide, qui comprend un corps creux présentant une entrée et une sortie du fluide.

Cet appareil est équipé d'une turbine placée dans ledit corps et apte à être entraînée en rotation par le flux du fluide ; d'un générateur de courant comprenant un rotor relié en rotation à ladite turbine et un stator et délivrant un courant alternatif substantiellement sinusoïdal ; et d'un dispositif électronique alimenté en énergie électrique par ledit générateur de courant.

Le dispositif électronique comprend un moyen de détection d'au moins une position angulaire déterminée de ladite turbine, pour délivrer une impulsion électrique à chaque fois que la turbine passe par cette position angulaire, ledit moyen de détection comprenant un comparateur apte à délivrer ladite impulsion électrique à chaque fois que la valeur du courant alternatif issu du générateur de courant passe au-dessus d'un seuil de courant, un volume élémentaire étant égal au volume écoulé entre deux impulsions successives ; un compteur d'impulsions pour compter les impulsions successives délivrées par ledit moyen de détection ; un moyen pour fixer des seuils de valeurs du nombre d'impulsions ; un moyen de comparaison pour comparer auxdits seuils le nombre d'impulsions délivré par le compteur d'impulsions et délivrer sélectivement des signaux de commande différents quand les nombres d'impulsions délivrés par le compteur d'impulsions, correspondant audit volume élémentaire multiplié par ce nombre d'impulsions délivré, se situent dans des plages de valeurs déterminées par lesdits seuils de valeurs ; et un moyen d'avertissement délivrant sélectivement des signaux d'avertissement différents correspondant respectivement auxdits signaux de commande différents.

Le dispositif électronique peut comprendre un moyen pour remettre le compteur d'impulsions à une valeur d'origine au bout d'un délai prédéterminé lorsque la valeur du nombre d'impulsions reste identique pendant ce délai.

Le dispositif électronique peut comprendre un moyen de détection de la vitesse de rotation de la turbine et un moyen pour alimenter en énergie électrique le moyen d'avertissement en fonction de cette vitesse de rotation.

L'appareil peut comprendre un accumulateur d'énergie électrique relié au générateur de courant et apte à alimenter au moins partiellement le dispositif électronique.

Le générateur de courant peut être relié à un accumulateur d'énergie électrique via un point commun d'alimentation et le dispositif électronique peut comprendre un premier groupe de circuits et un second groupe de circuits, le premier groupe de circuits étant relié directement audit point commun d'alimentation, le second groupe étant relié audit point commun d'alimentation par l'intermédiaire d'un interrupteur soumis à un détecteur de la vitesse de rotation de la turbine pour n'alimenter le second groupe de circuits que si la vitesse de rotation de la turbine est supérieure à un seuil de vitesse de rotation.

L'appareil peut comprendre un moyen d'affichage de valeurs issues du compteur d'impulsions.

L'appareil peut comprendre un caisson étanche qui est installé à l'intérieur dudit corps creux, qui porte ladite turbine et dans lequel le dispositif électronique et le stator du générateur de courant sont placés, le rotor du générateur de courant étant porté par ladite turbine.

Ledit corps creux peut comprendre un pommeau de douche.

Des appareils de surveillance de l'écoulement d'un liquide selon la présente invention et leurs modes de fonctionnement vont maintenant être décrits à titre d'exemples non limitatifs et illustrés par le dessin dans lequel:
- la figure 1 représente une coupe longitudinale d'un appareil formant un pommeau de douche, selon l'axe de la sortie du fluide ;
- la figure 2 représente une coupe longitudinale de l'appareil de la figure 1, perpendiculairement audit axe de sortie du fluide ;
- la figure 3 représente un schéma électronique d'un dispositif électronique porté par l'appareil de la figure 1 ;
- la figure 4 représente un diagramme de fonctionnement de diodes électroluminescentes du dispositif électronique de la figure 3 ;
- les figures 5a à 5d représentent des diagrammes de fonctionnement de certains composants électroniques du dispositif électronique de la figure 3 ;
- la figure 6 représente une coupe longitudinale d'un autre appareil se montant sur une conduite, selon l'axe de cette conduite ; et
- la figure 7 représente un schéma électronique d'un dispositif électronique porté par l'appareil de la figure 6.

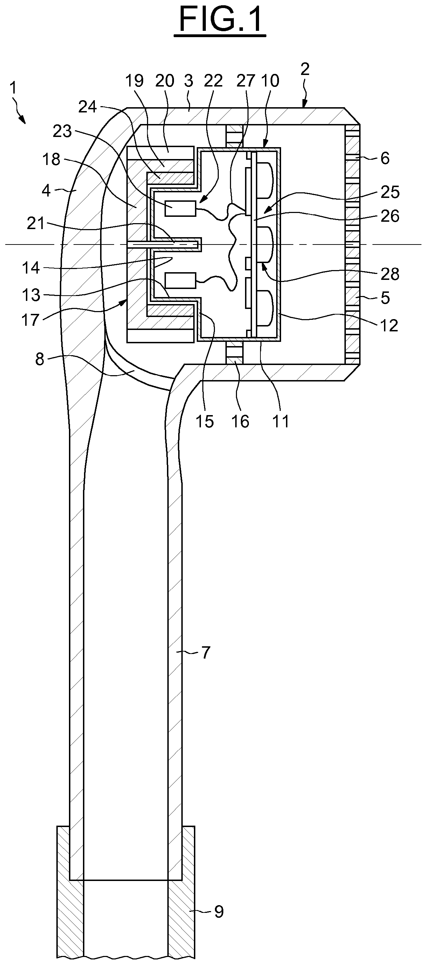

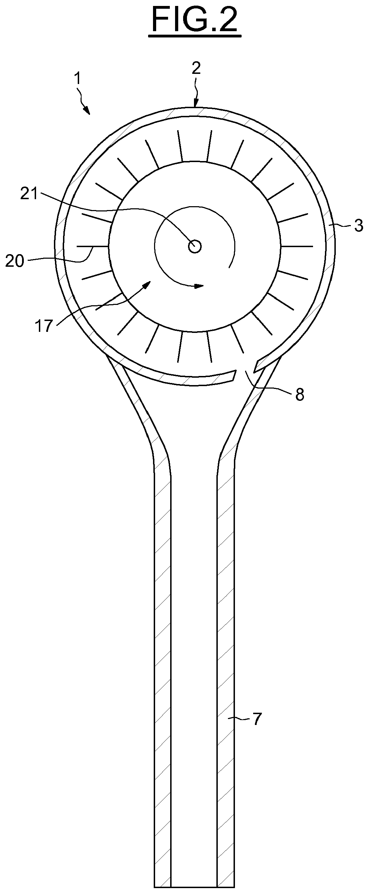

Selon une variante de réalisation illustrée sur les figures 1 et 2, un appareil comprend un pommeau de douche 1 qui comprend, par exemple, un corps creux 2 qui comprend une paroi périphérique cylindrique 3, une paroi radiale arrière 4 et une paroi avant ou frontale rapportée 5 qui présente une pluralité d'orifices traversants 6 de sortie d'eau. Ce corps creux 2 est muni latéralement d'un bras allongé creux 7, formant généralement une poignée, qui est relié à la paroi 3 du côté de la paroi arrière 4 et qui communique avec l'intérieur du corps creux 2 par un passage 8. L'extrémité libre de la poignée creuse 7 est reliée à un conduit 9, généralement souple, d'amenée d'eau sous pression.

A l'intérieur du corps creux 2, le pommeau 1 est équipé d'un caisson creux étanche 10 qui comprend une partie avant comprenant une paroi périphérique cylindrique 11 située à distance de la paroi périphérique 3 et une paroi radiale avant 12 située à distance de la paroi frontale 5 et qui comprend une partie arrière comprenant une paroi périphérique cylindrique 13 de diamètre réduit par rapport à la paroi cylindrique 11 et une paroi arrière 14 située à distance de la paroi arrière 4, les paroi cylindriques 11 et 13 étant reliées par une paroi annulaire radiale 15.

Le caisson creux 10 est monté de façon suspendue par des bras radiaux espacés 16 qui relient la paroi périphérique 3 du corps 2 et la paroi périphérique 11 du caisson 10.

Le pommeau 1 est équipé d'une turbine 17 qui comprend un plateau radial 18 disposé dans l'espace aménagé entre la paroi arrière 4 du corps 2 et la paroi arrière 14 du caisson 10 et une paroi périphérique cylindrique 19 qui entoure à distance la paroi cylindrique 13 du caisson 10 et qui porte des ailettes périphériques 20. La turbine 17 est montée tournante par l'intermédiaire d'un arbre axial 21 reliant la paroi arrière 14 du caisson 10 et son plateau radial 18.

La turbine 17 est agencée de telle sorte qu'un flux d'eau sous pression, arrivant par le canal du bras allongé creux de poignée 7 et arrivant dans le corps creux 2 au travers du passage 8, s'écoule à l'intérieur du corps creux 10 en passant entre ce dernier et le caisson 10 et s'évacue vers l'avant au travers des orifices 6 de la paroi frontale 5 en formant des jets. Ce faisant, le flux d'eau agit sur les ailettes 20 de la turbine 17 et entraîne cette dernière en rotation. D'une manière générale, la vitesse de rotation de la turbine 17 est substantiellement proportionnelle au débit du flux d'eau.

Le pommeau 1 est équipé d'un générateur de courant 22, délivrant un courant alternatif, dont le stator 23 est monté à l'intérieur de la partie arrière du caisson creux 2 et dont le rotor 24 est porté par la face intérieure de la paroi cylindrique 19 de la turbine 14 et est placé à distance de la paroi cylindrique 13 du caisson 10.

Le pommeau 1 est équipé d'un dispositif électronique 25 porté par une plaque de circuit imprimé 26 montée radialement à l'intérieur de la partie avant du caisson creux 10.

Le dispositif électrique 25 est relié au stator 23 par des fils électriques 27 en vue de son alimentation en énergie électrique et comprend des moyens d'avertissement et d'éclairage 28, tels que des diodes électroluminescentes, montés sur la plaque de circuit imprimé 26 et en avant de cette dernière.

Au moins la paroi frontale 5 du corps creux 2 et la paroi radiale avant 12 du caisson creux 10 sont, au moins en partie, transparentes ou translucides de façon que la lumière émise par les moyens d'éclairage 28 rayonne vers l'avant du pommeau 1.

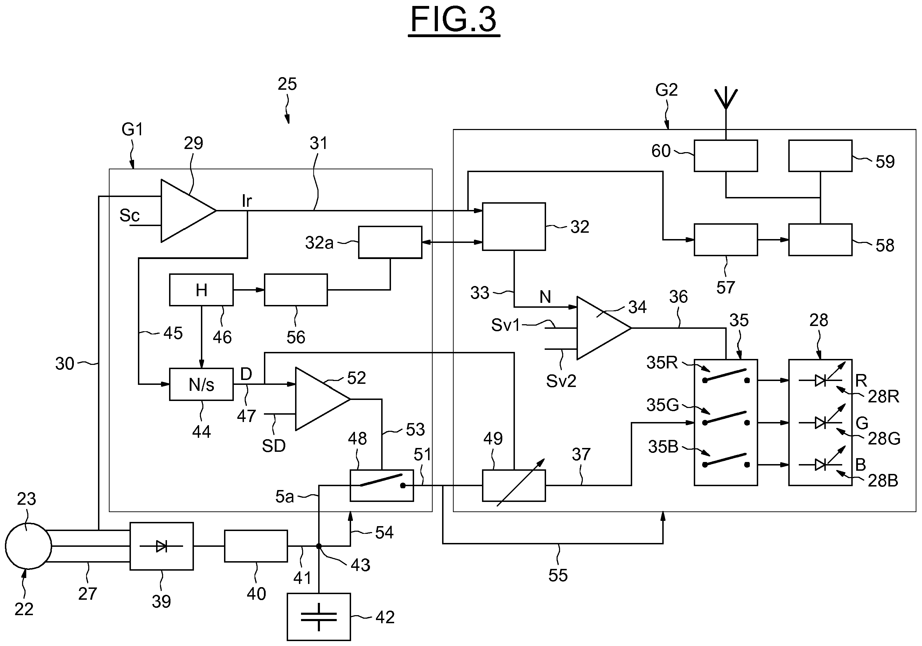

En se reportant aux figures 3 et suivantes, on va maintenant décrire un dispositif électrique 25 et son fonctionnement.

Le dispositif électronique 25 comprend des moyens d'indication de consommation d'eau décrits ci-après.

Comme illustré sur la figure 3, le dispositif électronique 25 comprend un comparateur 29 dont une entrée est reliée au stator 23 du générateur de courant 22 par une ligne 30 et l'autre entrée est soumise à un seuil de courant Sc. Ce comparateur 29 délivre une impulsion électrique Ir sur une ligne 31 à chaque fois que la valeur du courant alternatif substantiellement sinusoïdal issu du stator 23 passe au-dessus du seuil Sc, c'est-à-dire à chaque fois que la turbine 17 passe par une position angulaire déterminée. Ainsi, entre deux impulsions Ir successives, un volume élémentaire Ve d'eau a traversé le pommeau 1.

Le dispositif électronique 25 comprend un compteur d'impulsions 32, en temps réel, dont une entrée est reliée à la ligne 31 pour compter les impulsions délivrées par le comparateur 29 depuis une valeur d'origine et qui délivre les nombres successifs d'impulsions comptées sur une ligne 33. A chaque nombre délivré N d'impulsions correspond un volume d'eau V ayant traversé le pommeau 1, ce volume étant égal au volume élémentaire Ve multiplié par ce nombre délivré N. Au compteur d'impulsions 32 est associée une mémoire 32a de stockage du nombre N.

Le dispositif électronique 25 comprend un comparateur 34 dont une entrée est reliée à la ligne 33 et qui est soumis à, par exemple, deux seuils Sv1 Sv2 de valeurs du nombre d'impulsions et dont la sortie est reliée à un sélecteur d'alimentation 35 par une ligne 36. Les seuils Sv1 Sv2 correspondent à des volumes V1 et V2 d'eau s'étant écoulés au travers du pommeau 1, le volume V2 étant plus grand que le volume V1.

Les moyens d'éclairage précités 28 comprennent, par exemple, des diodes électroluminescentes 28G, 28B et 28R, délivrant, par exemple, respectivement des signaux d'avertissement lumineux de couleurs verte, bleue et rouge.

Les diodes électroluminescentes 28G, 28B et 28R sont reliées à une ligne 37 d'alimentation en énergie électrique, reliée au générateur de courant 22, par l'intermédiaire du sélecteur d'alimentation 35 qui comprend des interrupteurs 35G, 35B et 35R soumis aux signaux délivrés par le comparateur 34.

Le dispositif électronique 25 fonctionne de la manière suivante.

On suppose à l'origine qu'il n'y a pas de flux d'eau dans le pommeau 1 et que le compteur d'impulsions 32 est à une valeur d'origine égale à zéro (soit : N= 0). Les interrupteurs 35G, 35B et 35R sont à l'état ouvert.

Maintenant, un utilisateur établit un flux d'eau au travers du pommeau 1. Ce flux d'eau fait tourner la turbine 17.

Au fur et à mesure de la rotation de la turbine 17 sous l'effet du flux d'eau, le comparateur 29 détecte la rotation de la turbine 17 et délivre des impulsions successives Ir. Le compteur 32 compte ces impulsions et s'incrémente et en délivre, au fur et à mesure, le nombre N au comparateur 34.

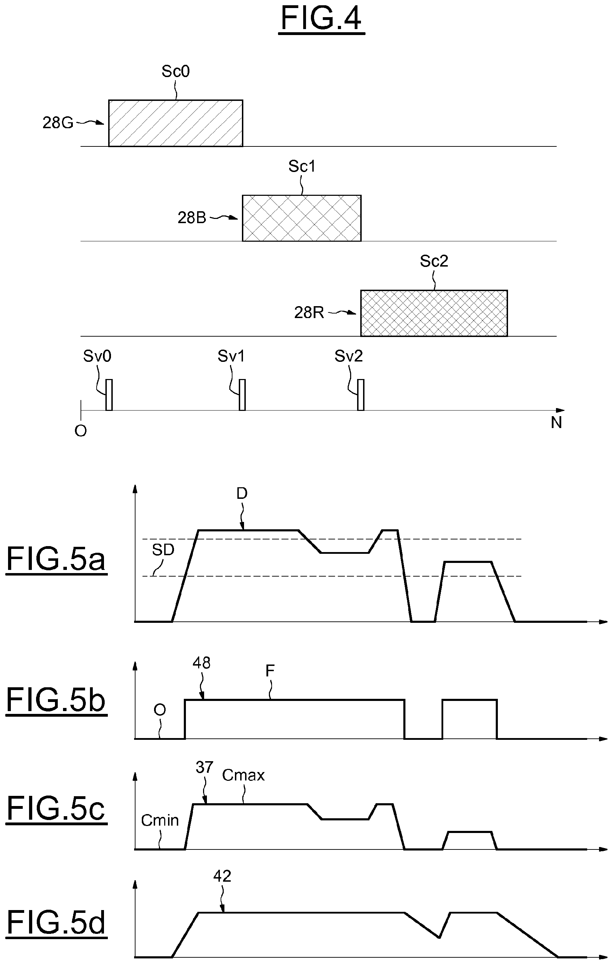

Dès la première impulsion Ir ou lorsque le nombre d'impulsions passe au-dessus d'un petit nombre prédéterminé Svo, et à condition que la vitesse de rotation soit suffisante pour que le générateur de courant 22 alimente les circuits électroniques comme on le verra plus loin, le comparateur 34 envoie un signal de commande Sco au sélecteur d'alimentation 35 qui ferme l'interrupteur 35G pour que les diodes électroluminescentes 28G soient alimentées depuis la ligne 37 et s'allument, comme illustré sur la figure 4.

Lorsque le nombre N d'impulsions délivré par le compteur d'impulsions 32 passe le seuil Sv1, le comparateur 34 envoie un signal de commande Sc1 au sélecteur d'alimentation 35 qui alors ouvre l'interrupteur 35G pour éteindre les diodes électroluminescentes 28G et ferme l'interrupteur 35B pour que les diodes électroluminescentes 28B soient alimentées depuis la ligne 37 et s'allument, comme illustré sur la figure 4.

Lorsque le nombre N d'impulsions délivré par le compteur d'impulsions 32 passe le seuil Sv2, le comparateur 34 envoie un signal de commande Sc2 au sélecteur d'alimentation 35 qui alors ouvre l'interrupteur 35B pour éteindre les diodes électroluminescentes 28B et ferme l'interrupteur 35R pour que les diodes électroluminescentes 28R soient alimentées depuis la ligne 37 et s'allument, comme illustré sur la figure 4.

Si le flux d'eau est arrêté par l'utilisateur du pommeau 1 puis repris, le compteur reprend le comptage à partir du nombre N stocké lors de l'arrêt.

Il résulte de ce qui précède que l'utilisateur du pommeau 1 est informé de sa consommation d'eau par les couleurs émises par les moyens d'éclairage 28.

Si les diodes 28G, vertes, sont allumées, cela signifie que sa consommation est inférieure au volume V1. Si les diodes 28B, bleues, sont allumées, cela signifie que sa consommation est comprise entre les volumes V1 et V2. Si les diodes 28B, rouges, sont allumées, cela signifie que sa consommation est supérieure au volume V2.

Par exemple, le seuil Sv1 peut être programmé de telle sorte que le volume V1 soit à une valeur comprise entre dix-neuf et vingt et un litres d'eau et le seuil Sv2 peut être programmé de telle sorte que le volume V2 soit à une valeur comprise entre trente-neuf et quarante et un litres d'eau.

Le dispositif électronique 25 comprend en outre des moyens de gestion de consommation d'énergie électrique et de remise à zéro décrits ci-après.

Comme illustré sur la figure 3, les fils électriques 27 issus du stator 22 du générateur de courant sont reliés à l'entrée d'un redresseur 39 dont la sortie est reliée à l'entrée d'un régulateur de tension 40 présentant une ligne de sortie 41. Cette ligne de sortie 41 constitue une source électrique principale en courant continu, sous une tension constante. La valeur du courant continu délivré varie substantiellement proportionnellement à la vitesse de rotation du stator 23 et donc à la vitesse de rotation de la turbine 17 sous l'effet du flux d'eau traversant le pommeau 1. Une variation selon un cycle d'usage du pommeau 1 est illustrée sur la figure 5a.

Le dispositif électronique 25 comprend une source électrique secondaire formée par un accumulateur d'énergie électrique 42, tel qu'un condensateur, relié à la ligne de sortie 41, en un point commun d'alimentation 43.

Le dispositif électronique 25 comprend un calculateur 44 de la vitesse de rotation de la turbine, dont une entrée reçoit le signal d'impulsion Ir de sortie du comparateur 29 par une ligne 45 et qui est soumis à une horloge 46. Le calculateur de vitesse 44 délivre sur une ligne 47, en temps réel, un signal de vitesse D dont la valeur est substantiellement proportionnelle au débit du flux d'eau traversant le pommeau 1.

Le dispositif électronique 25 comprend un interrupteur 48 et un régulateur de courant à valeur réglable 49, montés en série entre le point commun d'alimentation 43 et la ligne d'alimentation 37, via une ligne 50 et une ligne 51.

Le dispositif électronique 25 comprend un comparateur 52 dont une entrée est reliée à la ligne de sortie 47 du calculateur de vitesse 44, qui est soumis un seuil de vitesse SD et dont la sortie est reliée à une entrée de commande de l'interrupteur 49 via une ligne 53. Par exemple, le seuil de vitesse SD peut être programmé pour correspondre à une valeur de débit d'eau comprise entre deux et trois litres par minute.

La ligne de sortie 47 du calculateur de vitesse 44 est reliée à une entrée de commande du régulateur de courant 49.

Le dispositif électronique 25 fonctionne de la manière suivante.

Lorsque la valeur du signal de vitesse D est inférieure au seuil de vitesse SD, le comparateur 52 laisse l'interrupteur 48 à son état ouvert O. Le sélecteur 35 n'est pas alimenté en énergie électrique et les moyens d'éclairage 28 composés des diodes électroluminescentes 28G, 28B et 28R sont éteints.

Lorsque la valeur du signal de vitesse D est supérieure au seuil de vitesse SD, le comparateur 52 délivre un signal pour placer l'interrupteur 48 à son état fermé. Les moyens d'éclairage 28 sont alimentés via le régulateur de courant 49 et le sélecteur d'alimentation 35.

Des états ouverts O de l'interrupteur 48 et des états fermés F de l'interrupteur 48, en fonction du signal de débit de la figure 5a, sont illustrés sur la figure 5b. Lorsque l'interrupteur 48 est à l'état fermé F, le régulateur de courant 49 est commandé par la ligne de sortie 47 du comparateur 52 de telle sorte que le courant délivré aux moyens d'éclairage 28, depuis le point commun d'alimentation 43 et via le sélecteur d'alimentation 35, varie substantiellement proportionnellement au signal de débit D, entre une valeur minimum Cmin, par exemple égale à zéro, et une valeur maximum Cmax.

Des variations du courant délivré aux moyens d'éclairage 28 sur la ligne d'alimentation 37, en fonction des variations du signal de débit D de la figure 5a sont illustrées sur la figure 5c.

Ainsi, la luminosité émise par les moyens d'éclairage 28 varie substantiellement proportionnellement au débit d'eau au travers du pommeau 1.

Par ailleurs, les différents composants électroniques du dispositif électronique 25 peuvent être alimentés en énergie électrique de la manière suivante, de telle sorte que le courant électrique délivré par le générateur de courant 22 soit apte à alimenter en priorité les circuits électroniques.

Le point commun d'alimentation 43 est apte à alimenter en énergie électrique, en vue de leur fonctionnement, un premier groupe de circuits G1 qui comprend notamment le comparateur 29, le calculateur de débit 44, l'horloge 46, le comparateur 52 et l'interrupteur 48, via une ligne 54.

La ligne de sortie 51 de l'interrupteur 48 est apte à alimenter en énergie électrique, en vue de leur fonctionnement, un second groupe de circuits G2 qui comprend notamment le compteur d'impulsions 32, le comparateur 34, le sélecteur d'alimentation 35, les moyens d'éclairage 28 et le régulateur 49, via une ligne 55.

Il en résulte que le groupe de circuits G2 n'est alimenté que si l'interrupteur 48 est à l'état fermé, comme décrit précédemment, c'est-à-dire que si la valeur du signal de vitesse D est au-dessus du seuil de vitesse SD. Des états d'alimentation par la ligne 55 du groupe de circuits G2 sont identiques aux états ouvert et fermé de l'interrupteur 48 tels qu'illustrés sur la figure 5b.

Il en résulte également que lorsque le signal de vitesse D est au-dessous du seuil de vitesse SD, seul le premier groupe de circuits G1 est alimenté en énergie électrique via la ligne 54, de la manière suivante.

Dans le cas ci-dessus, tant que le flux d'eau au travers du pommeau 1 existe et fait tourner la turbine 17, le point commun d'alimentation 54 fournit le courant nécessaire qui provient de la ligne 41 issue du générateur de courant 22 et de l'accumulateur 42 préalablement chargé par le générateur de courant 22 lors des premières rotations de la turbine 17.

Si le flux d'eau est stoppé, le générateur de courant 22 ne fournit plus de courant électrique au point commun 43. Alors, seule la charge de l'accumulateur 42 peut alimenter le premier groupe de circuits G1, en particulier la mémoire 32a de façon à conserver en mémoire le nombre d'impulsions correspondant au volume préalablement détecté.

Si la durée d'arrêt du flux d'eau au travers du pommeau 1 dépasse une valeur prédéterminée Ta, fixée par un temporisateur 56 du premier groupe de circuits G1, interposé entre l'horloge 46 et la mémoire 32a, et à condition que la charge de l'accumulateur 42 reste suffisante, alors, le temporisateur 56 commande une remise à zéro de la mémoire 52a. Quand le flux d'eau reprendra ultérieurement, pour un nouveau cycle, le compteur 32 comptera à partir de zéro comme décrit précédemment.

Si le flux d'eau est rétabli au travers du pommeau 1 avant ladite valeur prédéterminée Ta de durée, le compteur 32 compte à partir du nombre N enregistré dans la mémoire 32a et le dispositif fonctionne comme décrit précédemment.

Selon une variante de réalisation, la valeur prédéterminée Ta peut être déterminée par une durée présumée de décharge de l'accumulateur 42.

Selon une variante de réalisation, les moyens lumineux d'avertissement pourraient être complétés ou remplacés par un afficheur de volume.

Il résulte de ce qui précède que le dispositif comprend des moyens permettant d'optimiser la consommation en énergie électrique de façon que le pommeau soit autonome et n'ait pas besoin, préférentiellement, d'une source rapportée telle qu'une pile.

Selon une variante de réalisation, les moyens lumineux d'avertissement pourraient être complétés ou remplacés par des moyens d'avertissement sonore.

Selon une variante de réalisation également illustrée sur la figure 3, la ligne 31 délivrant les impulsions Ir est reliée à un circuit 57 d'incrémentation d'une mémoire permanente 58, du type ROM, en vue d'un comptage totalisant les impulsions successives Ir et conservant cette totalisation même en l'absence d'alimentation électrique.

La mémoire permanente 58 peut être reliée à un circuit d'affichage 59, dont l'afficheur (non représenté) peut être porté par le corps 2 du pommeau de douche 1 et visible de l'extérieur. Ainsi, l'utilisateur peut effectuer visuellement des relevés de consommation d'eau.

La mémoire permanente 58 peut être reliée à un circuit d'émission/réception 60 de signaux radioélectriques ou à un modem incluant un tel circuit d'émission/réception, de façon à permettre des relevés à distance de consommation d'eau.

Selon une variante de réalisation, l'accumulateur d'énergie électrique 42 peut être remplacé par une pile non reliée au point commun 43 mais agencée de façon à alimenter le groupe G1 de circuits électroniques lorsque la turbine 17 est à l'arrêt.

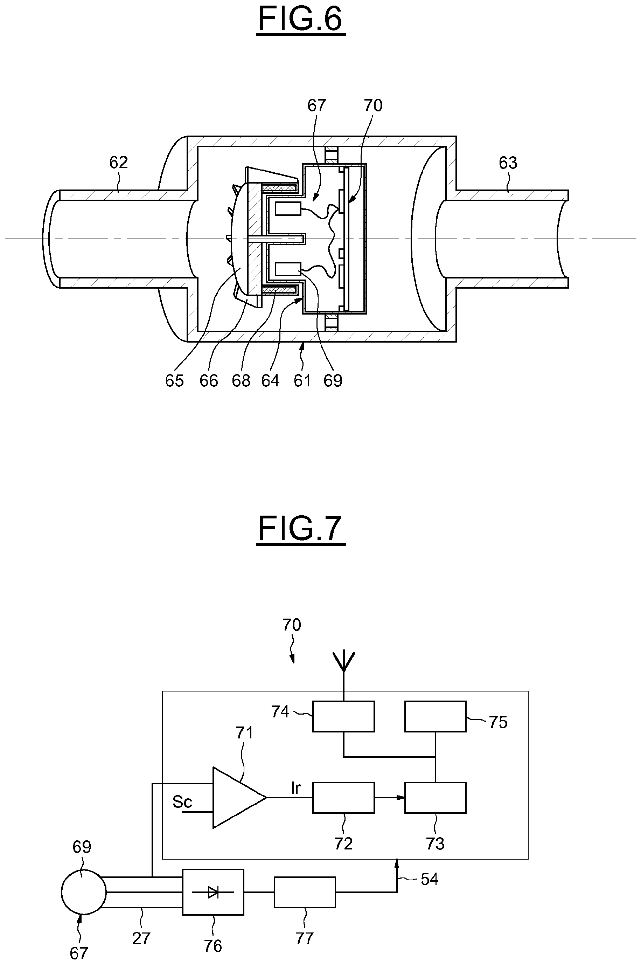

Selon une variante de réalisation illustrée sur la figure 6, un appareil comprend un corps tubulaire creux 61 muni d'un embout d'entrée de fluide 62 et d'un embout de sortie de fluide 63, agencés par exemple de façon opposée et selon l'axe du corps tubulaire 61. Par exemple, cet appareil peut être installé sur une conduite ou une canalisation d'eau, éventuellement sur une conduite munie d'un robinet pour délivrer de l'eau.

De façon équivalente à l'exemple décrit en référence aux figures 1 et 2, à l'intérieur du corps creux 61 est installé un caisson creux étanche 64 qui porte, extérieurement et du côté de l'embout d'entrée d'eau 62, une turbine 65 munie d'ailettes 66, de telle sorte qu'un flux d'eau entrant par l'embout d'entrée 62 entraîne en rotation la turbine 65, s'écoule entre la périphérie du caisson 64 et la paroi périphérique du corps creux 61, puis est évacué par l'embout de sortie 63.

Comme précédemment, le caisson 64 est équipé d'un générateur de courant 67 qui comprend un rotor 68 composés d'aimants portés par la turbine 65 et un stator 69 disposé à l'intérieur du caisson 64.

Comme précédemment, un dispositif électronique 70 est disposé à l'intérieur du caisson 64.

Selon une variante de réalisation, un dispositif électronique 70 peut être équivalent au dispositif électronique 25 décrit précédemment. Dans ce cas, soit le dispositif de signalisation lumineuse 28 est disposé à l'extérieur du corps creux 61, soit, si le dispositif de signalisation 28 est placé, comme précédemment, à l'intérieur du corps creux 61, la paroi du corps creux 61 est au moins en partie en une matière transparente ou translucide.

Selon une variante de réalisation illustrée sur la figure 7, un dispositif électronique 70 comprend une partie du dispositif électronique 25 décrit précédemment.

Par exemple, comme illustré sur la figure 7, le dispositif électronique 70 peut comprendre un comparateur 71, équivalent au comparateur 29, délivre une impulsion Ir à chaque fois que la valeur du courant substantiellement sinusoïdal issu du stator 69 passe au-dessus du seuil Sc, c'est-à-dire à chaque fois que la turbine 65 passe par une position angulaire déterminée.

Les impulsions Ir issues du comparateur 29 sont délivrées à un circuit 57 d'incrémentation d'une mémoire permanente 58, du type ROM.

La mémoire permanente 58 peut être reliée à un circuit d'affichage 59, dont l'afficheur (non représenté) peut être porté par le corps 61 et visible de l'extérieur. Ainsi, l'utilisateur peut effectuer visuellement des relevés de consommation d'eau.

La mémoire permanente 58 peut être reliée à un circuit d'émission/réception 60 de signaux radioélectriques ou à un modem incluant un tel circuit d'émission/réception, de façon à permettre des relevés à distance de consommation d'eau.

Le courant électrique délivré par le générateur de courant électrique 67 alimente le dispositif électronique 70 par l'intermédiaire d'un redresseur 76 et un régulateur de tension 77.

Les relevés de consommation d'eau peuvent être effectués lorsque le dispositif électronique 70 est alimenté en énergie électrique, c'est-à-dire lorsque la turbine 65 est entraînée en rotation par le flux d'eau traversant le corps creux 61. Néanmoins, une pile électrique pourrait être prévue pour alimenter le dispositif électronique 70 lorsque la turbine 65 est à l'arrêt.

La présente invention ne se limite pas aux exemples ci-dessus décrits. En particulier, le caisson creux étanche installé dans le flux du fluide pourrait être de structures et de formes différentes. La turbine pourrait être installée différemment dans le flux du fluide. D'autres variantes de réalisations sont possibles sans sortir du cadre de l'invention.

## Revendications

1. Procédé de surveillance de l'écoulement d'un liquide et de fonctionnement d'un dispositif électronique porté par un appareil muni d'une turbine (17) apte à être entraînée en rotation par un flux d'un fluide, d'un générateur de courant (22) comprenant un rotor relié en rotation à ladite turbine et un stator et délivrant un courant alternatif substantiellement sinusoïdal et d'un moyen de détection d'au moins une position angulaire déterminée de ladite turbine, délivrant une impulsion électrique à chaque fois que la turbine passe par cette position angulaire, le procédé de surveillance est **caractérisé par**:
ledit moyen de détection comprenant un comparateur (29) apte à délivrer ladite impulsion électrique (Ir) à chaque fois que la valeur du courant alternatif issu du générateur de courant (22) passe au-dessus d'un seuil de courant (Sc), un volume élémentaire (Ve) étant égal au volume écoulé entre deux impulsions successives, le procédé comprenant :
incrémenter un compteur d'impulsions électriques (32) à chaque fois que le moyen de détection délivre une impulsion électrique (Ir),
fixer, depuis une valeur d'origine, des seuils de valeurs du nombre d'impulsions, et
activer sélectivement un moyen d'avertissement (28) pour délivrer des signaux d'avertissement différents quand les nombres d'impulsions délivrés par le compteur d'impulsions, correspondant audit volume élémentaire (Ve) multiplié par ce nombre d'impulsions délivré, se situent dans des plages de valeurs déterminées par lesdits seuils de valeurs.

2. Procédé selon la revendication 1, comprenant :
remettre le compteur d'impulsions à ladite valeur d'origine au bout d'un délai prédéterminé lorsque la valeur du nombre d'impulsions délivrée par le compteur d'impulsions reste identique pendant ce délai.

3. Procédé selon l'une des revendications précédentes, comprenant :
calculer en temps réel la fréquence desdites impulsions,
et alimenter en énergie électrique le moyen d'avertissement en fonction de cette fréquence calculée.

4. Procédé selon l'une quelconque des revendications précédentes, dans lequel ledit moyen d'avertissement est alimenté en énergie électrique en fonction de la vitesse de rotation de ladite turbine.

5. Procédé selon l'une quelconque des revendications précédentes, dans lequel le générateur de courant électrique (22) est relié à un accumulateur d'énergie électrique (42) via un point commun d'alimentation en vue d'alimenter en énergie électrique, dans lequel le dispositif électronique comprend au moins un premier groupe de circuits (G1) et un second groupe de circuits (G2), le procédé comprenant :
détecter en temps réel la valeur de la vitesse de rotation de la turbine,
alimenter en énergie électrique via ledit point commun le premier groupe de circuits (G1) et le second groupe de circuits (G2) si la valeur de la vitesse de rotation est supérieure ou égale à un seuil de vitesse (SD),
n'alimenter en énergie électrique via ledit point commun que ledit premier groupe de circuits (G1) si la valeur de la vitesse de rotation est inférieure audit seuil de vitesse (SD).

6. Appareil de surveillance de l'écoulement d'un liquide, comprenant un corps creux présentant une entrée et une sortie du fluide, et équipé :
d'une turbine (17) placée dans ledit corps (2) et apte à être entraînée en rotation par le flux du fluide,
d'un générateur de courant (22) comprenant un rotor relié en rotation à ladite turbine et un stator et délivrant un courant alternatif substantiellement sinusoïdal,
et d'un dispositif électronique (25) alimenté en énergie électrique par ledit générateur de courant et comprenant
un moyen de détection) d'au moins une position angulaire déterminée de ladite turbine, pour délivrer une impulsion électrique à chaque fois que la turbine passe par cette position angulaire, l'appareil de surveillance est **caractérisé par**: ledit moyen de détection comprenant un comparateur (29) apte à délivrer ladite impulsion électrique (Ir) à chaque fois que la valeur du courant alternatif issu du générateur de courant (22) passe au-dessus d'un seuil de courant (Sc), un volume élémentaire (Ve) étant égal au volume écoulé entre deux impulsions successives,
un compteur d'impulsions pour compter les impulsions successives délivrées par ledit moyen de détection,
un moyen pour fixer des seuils de valeurs du nombre d'impulsions,
un moyen de comparaison pour comparer auxdits seuils le nombre d'impulsions délivré par le compteur d'impulsions et pour délivrer sélectivement des signaux de commande différents quand les nombres d'impulsions délivrés par le compteur d'impulsions, correspondant audit volume élémentaire (Ve) multiplié par ce nombre d'impulsions délivré, se situent dans des plages de valeurs déterminées par lesdits seuils de valeurs,
et un moyen d'avertissement délivrant sélectivement des signaux d'avertissement différents correspondant respectivement auxdits signaux de commande différents.

7. Appareil selon la revendication 6, dans lequel le dispositif électronique comprend un moyen pour remettre le compteur d'impulsions à une valeur d'origine au bout d'un délai prédéterminé lorsque la valeur du nombre d'impulsions reste identique pendant ce délai.

8. Appareil selon l'une des revendication 6 et 7, dans lequel le dispositif électronique comprend un moyen de détection de la vitesse de rotation de la turbine et un moyen pour alimenter en énergie électrique le moyen d'avertissement en fonction de cette vitesse de rotation.

9. Appareil selon l'une quelconque des revendications 6 à 8, comprenant un accumulateur d'énergie électrique relié au générateur de courant et apte à alimenter au moins partiellement le dispositif électronique.

10. Appareil selon l'une quelconque des revendications 6 à 8, dans lequel le générateur de courant est relié à un accumulateur d'énergie électrique via un point commun d'alimentation et dans lequel le dispositif électronique comprend un premier groupe de circuits (G1) et un second groupe de circuits (G2) ; le premier groupe de circuits (G1) étant relié directement audit point commun d'alimentation, le second groupe étant relié audit point commun d'alimentation par l'intermédiaire d'un interrupteur soumis à un détecteur de la vitesse de rotation de la turbine pour n'alimenter le second groupe de circuits (G2) que si la vitesse de rotation de la turbine est supérieur à un seuil de vitesse de rotation (SD).

11. Appareil selon l'une quelconque des revendications 6 à 10, comprenant un moyen d'affichage de valeurs issues du compteur d'impulsions.

12. Appareil selon l'une quelconque des revendications 6 à 11, comprenant un caisson étanche qui est installé à l'intérieur dudit corps creux, qui porte ladite turbine et dans lequel le dispositif électronique et le stator du générateur de courant sont placés, le rotor du générateur de courant étant porté par ladite turbine.

13. Appareil selon l'une quelconque des revendications 6 à 12, dans lequel ledit corps creux est un pommeau de douche.

## Patentansprüche

1. Verfahren der Überwachung des Fließens einer Flüssigkeit und der Funktion einer elektronischen Vorrichtung, getragen von einem Gerät, ausgestattet mit einer Turbine (17), fähig, rotierend von einer Strömung einer Flüssigkeit angetrieben zu werden, einem Stromgenerator (22), umfassend einen Rotor, rotierend verbunden mit der Turbine, und einem Stator, und einen im Wesentlichen sinusförmigen Wechselstrom liefernd, und mit einem Detektionsmittel von wenigstens einer festgelegten Winkelposition der Turbine, jedes Mal, wenn die Turbine diese Winkelposition durchläuft, einen elektrischen Impuls bereitstellend, wobei das Überwachungsverfahren **dadurch gekennzeichnet ist, dass**:
das Detektionsmittel einen Vergleicher (29) umfasst, fähig, jedes Mal, wenn der Wert des von dem Stromerzeuger (22) stammenden Wechselstroms eine Stromschwelle (Sc) unterschreitet, den elektrischen Impuls (Ir) zu liefern, ein Elementarvolumen (Ve) gleich dem zwischen zwei aufeinanderfolgenden Impulsen geflossene Volumen, wobei das Verfahren Folgendes umfasst:
Inkrementieren eines Zählers von elektrischen Impulsen (32) jedes Mal, wenn das Detektionsmittel einen elektrischen Impuls (Ir) liefert,
Bestimmen, ausgehend von einem ursprünglichen Wert, von Schwellen der Werte der Anzahl der Impulse, und
selektives Aktivieren eines Warnmittels (28) zum Liefern von verschiedenen Warnsignalen, wenn die von dem Impulszähler gelieferten Anzahlen von Impulsen, entsprechend dem Elementarvolumen (Ve) multipliziert mit dieser gelieferten Anzahl von Impulsen, sich in von den Wertschwellen festgelegten Wertbereichen befinden.

2. Verfahren nach Anspruch 1, umfassend:
Zurücksetzen des Impulszählers auf den ursprünglichen Wert nach Ablauf einer vorher festgelegten Frist, wenn der Wert der von dem Impulszähler gelieferten Impulsanzahl während dieser Frist identisch bleibt.

3. Verfahren nach einem der vorhergehenden Ansprüche, umfassend:
Kalkulieren in Echtzeit der Frequenz der Impulse,
und Versorgen des Warnmittels mit elektrischer Energie gemäß dieser kalkulierten Frequenz.

4. Verfahren nach einem der vorhergehenden Ansprüche, in welchem das Warnmittel gemäß der Rotationsgeschwindigkeit der Turbine mit elektrischer Energie versorgt wird.

5. Verfahren nach einem der vorhergehenden Ansprüche, in welchem der Generator des elektrischen Stroms (22) zwecks des Versorgens mit elektrischer Energie über einen gemeinsamen Versorgungspunkt mit einem Akkumulator von elektrischer Energie (42) verbunden ist, in welchem die elektronische Vorrichtung wenigstens eine erste Gruppe von Schaltungen (G1) und eine zweite Gruppe von Schaltungen (G2) umfasst, wobei das Verfahren Folgendes umfasst:
Detektieren in Echtzeit des Wertes der Rotationsgeschwindigkeit der Turbine,
Versorgen mit elektrischer Energie über den gemeinsamen Punkt der ersten Gruppe von Schaltungen (G1) und der zweiten Gruppe von Schaltungen (G2), wenn der Wert der Rotationsgeschwindigkeit größer als oder gleich wie eine Geschwindigkeitsschwelle (SD) ist,
Versorgen der ersten Gruppe von Schaltungen (G1) mit elektrischer Energie über den gemeinsamen Punkt nur dann, wenn die Rotationsgeschwindigkeit unterhalb der Geschwindigkeitsschwelle (SD) liegt.

6. Gerät zur Überwachung des Fließens einer Flüssigkeit, umfassend einen hohlen Körper, einen Einlass und einen Auslass des Fluids umfassend, und ausgestattet:
mit einer Turbine (17), in dem Körper (2) platziert und fähig, rotierend von dem Strom der Flüssigkeit angetrieben zu werden,
mit einem Stromerzeuger (22), umfassend einen Rotor, rotierend verbunden mit der Turbine, und einen Stator, und einen im Wesentlichen sinusförmigen Wechselstrom liefernd,
und mit einer elektrischen Vorrichtung (25), von dem Stromerzeuger mit elektrischer Energie versorgt und ein Detektionsmittel) von wenigstens einer festgelegten Winkelposition der Turbine umfassend, um jedes Mal, wenn die Turbine diese Winkelposition durchläuft, einen elektrischen Impuls zu liefern, wobei das Überwachungsgerät **gekennzeichnet ist durch**:
das Detektionsmittel, einen Vergleicher (29) umfassend, fähig, jedes Mal, wenn der Wert des von dem Stromerzeuger (22) stammende Wechselstroms eine Stromschwelle (Sc) unterschreitet, den elektrischen Impuls (Ir) zu liefern, ein Elementarvolumen (Ve) gleich dem zwischen zwei aufeinanderfolgenden Impulsen geflossenen Volumen,
einen Impulszähler, um die von dem Detektionsmittel gelieferten aufeinanderfolgenden Impulse zu zählen,
ein Mittel, um die Schwellen der Werte der Anzahl der Impulse festzulegen,
ein Vergleichsmittel zum Vergleichen der Anzahl der von dem Impulszähler gelieferten Anzahl der Impulse mit den Schwellen und um selektiv andere Steuersignale zu liefern, wenn sich die von dem Impulszähler gelieferten Anzahlen der Impulse, entsprechend dem Elementarvolumen (Ve) multipliziert mit dieser gelieferten Impulsanzahl, in von durch die Wertschwellen festgelegten Wertbereichen befinden,
und ein Warnmittel, selektiv verschiedene Warnsignale liefernd, entsprechend jeweils den verschiedenen Steuersignalen.

7. Gerät nach Anspruch 6, in welchem die elektronische Vorrichtung ein Mittel umfasst, um den Impulszähler nach Ablauf einer vorher festgelegten Frist auf einen ursprünglichen Wert zurückzusetzen, wenn der Wert der Impulsanzahl während dieser Frist identisch bleibt.

8. Gerät nach einem der Ansprüche 6 und 7, in welchem die elektronische Vorrichtung ein Detektionsmittel der Rotationsgeschwindigkeit der Turbine und ein Mittel zum Versorgen des Warnmittels mit elektrischer Energie gemäß dieser Rotationsgeschwindigkeit umfasst.

9. Gerät nach einem der Ansprüche 6 bis 8, umfassend einen Akkumulator elektrischer Energie, verbunden mit dem Stromerzeuger und fähig, die elektrische Vorrichtung wenigstens teilweise zu versorgen.

10. Gerät nach einem der Ansprüche 6 bis 8, in welchem der Stromerzeuger über einen gemeinsamen Versorgungspunkt mit einem Akkumulator elektrischer Energie verbunden ist und in welchem die elektronische Vorrichtung eine erste Gruppe von Schaltungen (G1) und eine zweite Gruppe von Schaltungen (G2) umfasst; wobei die erste Gruppe von Schaltungen (G1) direkt mit dem gemeinsamen Versorgungspunkt verbunden ist, wobei die zweite Gruppe mittels eines Schalters, einem Detektor der Rotationsgeschwindigkeit der Turbine unterworfen, mit dem gemeinsamen Versorgungspunkt verbunden ist, um die zweite Gruppe von Schaltungen (G2) nur dann zu versorgen, wenn die Rotationsgeschwindigkeit der Turbine über einer Schwelle der Rotationsgeschwindigkeit (SD) liegt.

11. Gerät nach einem der Ansprüche 6 bis 10, umfassend ein Mittel zur Anzeige von von dem Impulszähler stammenden Werten.

12. Gerät nach einem der Ansprüche 6 bis 11, umfassend ein dichtes Gehäuse, das im Inneren des hohlen Körpers installiert ist, das die Turbine trägt und in welchem die elektronische Vorrichtung und der Stator des Stromerzeugers platziert sind, wobei der Rotor des Stromerzeugers von der Turbine getragen wird.

13. Gerät nach einem der Ansprüche 6 bis 12, in welchem der hohle Körper ein Duschkopf ist.

## Claims

1. A method for monitoring the flow of a liquid and operating an electronic device carried by an apparatus provided with a turbine (17) capable of being rotated by a flow of a fluid, a current generator (22) comprising a rotor rotationally connected to said turbine and a stator and delivering a substantially sinusoidal alternating current and a means for detecting at least one determined angular position of said turbine, delivering an electrical pulse each time the turbine passes through this angular position, the monitoring method is **characterised by**:
said detection means comprising a comparator (29) capable of delivering said electrical pulse (Ir) each time the value of the alternating current from the current generator (22) passes above a current threshold (Sc), an elementary volume (Ve) being equal to the volume flowed between two successive pulses, the method comprising:
incrementing an electrical pulse counter (32) each time the detection means delivers an electrical pulse (Ir), setting, from an initial value, value thresholds of the number of pulses, and
selectively activating a warning means (28) for delivering different warning signals when the numbers of pulses delivered by the pulse counter, corresponding to said elementary volume (Ve) multiplied by this delivered number of pulses, are located within value ranges determined by said value thresholds.

2. The method according to claim 1, comprising:
resetting the pulse counter to said initial value after a predetermined time when the value of the number of pulses delivered by the pulse counter remains identical during this time.

3. The method according to one of the preceding claims, comprising:
calculating in real time the frequency of said pulses, and electrically powering the warning means based on this calculated frequency.

4. The method according to any one of the preceding claims, wherein said warning means is electrically powered based on the speed of rotation of said turbine.

5. The method according to any one of the preceding claims, wherein the electric current generator (22) is connected to an electric energy accumulator (42) via a common power point for electrically powering, wherein the electronic device comprises at least a first group of circuits (G1) and a second group of circuits (G2), the method comprising:
detecting in real time the value of the speed of rotation of the turbine,
electrically powering via said common point the first group of circuits (Gl) and the second group of circuits (G2) if the value of the speed of rotation is greater than or equal to a speed threshold (SD),
electrically powering via said common point only said first group of circuits (Gl) if the value of the speed of rotation is less than said speed threshold (SD).

6. An apparatus for monitoring the flow of a liquid, comprising a hollow body having a fluid inlet and outlet, and equipped with:
a turbine (17) placed in said body (2) and capable of being rotated by the flow of the fluid,
a current generator (22) comprising a rotor rotationally connected to said turbine and a stator and delivering a substantially sinusoidal alternating current,
and an electronic device (25) electrically powered by said current generator and comprising
a means for detecting at least one determined angular position of said turbine, for delivering an electric pulse each time the turbine passes through this angular position, the monitoring apparatus is **characterised by**:
said detection means comprising a comparator (29) capable of delivering said electrical pulse (Ir) each time the value of the alternating current from the current generator (22) passes above a current threshold (Sc), an elementary volume (Ve) being equal to the volume flowed between two successive pulses,
a pulse counter for counting successive pulses delivered by said detection means,
a means for setting value thresholds of the number of pulses,
a comparison means for comparing the number of pulses delivered by the pulse counter with said thresholds and for selectively delivering different control signals when the numbers of pulses delivered by the pulse counter, corresponding to said elementary volume (Ve) multiplied by this delivered number of pulses, lie within ranges of values determined by said value thresholds,
and a warning means selectively delivering different warning signals corresponding respectively to said different control signals.

7. The apparatus according to claim 6, wherein the electronic device comprises means for resetting the pulse counter to an initial value after a predetermined time when the value of the number of pulses remains identical during this time.

8. The apparatus according to one of claims 6 and 7, wherein the electronic device comprises a means for detecting the speed of rotation of the turbine and a means for electrically powering the warning means based on this speed of rotation.

9. The apparatus according to any one of claims 6 to 8, comprising an electrical energy accumulator connected to the current generator and capable of at least partially powering the electronic device.

10. The apparatus according to any one of claims 6 to 8, wherein the current generator is connected to an electrical energy accumulator via a common power point and wherein the electronic device comprises a first group of circuits (Gl) and a second group of circuits (G2); the first group of circuits (Gl) being connected directly to said common power point, the second group being connected to said common power point by means of a switch subjected to a turbine rotation speed detector for powering the second group of circuits (G2) only if the turbine rotation speed is greater than a rotation speed threshold (SD).

11. The apparatus according to any one of claims 6 to 10, comprising a means for displaying the values from the pulse counter.

12. The apparatus according to any one of claims 6 to 11, comprising a sealed casing which is installed inside said hollow body, which carries said turbine and wherein the electronic device and the stator of the current generator are placed, the rotor of the current generator being carried by said turbine.

13. The apparatus according to any one of claims 6 to 12, wherein said hollow body is a shower head.
